**Europäisches Patentamt**

**European Patent Office**

**Office européen des brevets**

(19)

(11) Numéro de publication : **0 310 528 B1**

(12) **FASCICULE DE BREVET EUROPEEN**

(45) Date de publication du fascicule du brevet :
26.02.92 Bulletin 92/09

(51) Int. Cl.⁵ : **F16J 15/12**, F02F 11/00

(21) Numéro de dépôt : **88420324.1**

(22) Date de dépôt : **30.09.88**

(54) **Joint de culasse pour moteur à combustion interne.**

(30) Priorité : **02.10.87 FR 8714141**

(43) Date de publication de la demande :
**05.04.89 Bulletin 89/14**

(45) Mention de la délivrance du brevet :
**26.02.92 Bulletin 92/09**

(84) Etats contractants désignés :
**DE ES FR GB IT NL SE**

(56) Documents cités :
**FR-A- 2 244 942**
**FR-A- 2 563 600**
**US-A- 1 913 736**

(73) Titulaire : **CURTY**
**25, rue Aristide Briand**
**F-69800 Saint-Priest, Rhône (FR)**

(72) Inventeur : **Genin, Bernard Claude**
**6, avenue Marcel Cachin**
**F-69200 Venissieux (FR)**

(74) Mandataire : **Maureau, Philippe**
**Cabinet Germain & Maureau Le Britannia -**
**Tour C 20, bld Eugène Déruelle Boîte Postale**
**3011**
**F-69392 Lyon Cédex 03 (FR)**

## Description

La présente invention a pour objet un joint de culasse pour moteur à combustion interne, et plus spécialement pour moteur à taux de compression élevé, tel qu'un moteur-diesel.

Il est connu qu'un moteur-diesel possède un taux de compression (rapport entre les volumes de la chambre de combustion dans les positions extrêmes haute et basse du piston) de l'ordre de 20, c'est-à-dire sensiblement plus élevé qu'un moteur à essence, pour lequel le taux de compression est de l'ordre de 9 à 10.

Compte-tenu de la valeur élevée de ce taux de compression, dans laquelle intervient l'épaisseur du joint de culasse, il est nécessaire de disposer d'un joint de culasse d'épaisseur très précise adaptée le mieux possible au moteur, pour tenir compte des tolérances de hauteur des pistons et d'autres facteurs, tels que rectification de la culasse, résultant d'une réfection du moteur.

Actuellement, les joints de culasse utilisés comportent une tôle centrale perforée revêtue d'un carton contenant des fibres d'amiante ou d'autres fibres telles que fibres de verre, ou fibres de matériau synthétique, tel que celui connu sous la dénomination KEVLAR (marque déposée). Il est usuel de réaliser trois types de joints d'épaisseurs différentes, une épaisseur moyenne et deux épaisseurs maximale et minimale, ces différentes épaisseurs étant obtenues par variation du grammage de l'amiante, tout en partant de la même tôle perforée centrale.

Outre le fait que l'amiante est un matériau insalubre, il convient d'envisager pour ces joints, quelle que soit leur composition, trois fabrications distinctes, ce qui constitue un inconvénient supplémentaire au plan économique.

Le document FR-A-2 563 600 décrit un joint de culasse pour moteur à combustion interne comprenant une âme constituée par une tôle, à laquelle sont associés des anneaux de feu entourant les ouvertures des chambres de combustion. L'âme comprend en outre des ouvertures pour le passage d'huile et de liquide de refroidissement, ainsi que pour le passage des goujons de serrage de la culasse sur le bloc moteur, les deux faces de l'âme étant munies de cordons souples pour réaliser l'étanchéité aux liquides.

La présente invention vise à remédier à ces inconvénients, en fournissant un joint de culasse sans amiante, et susceptible d'être réalisé de façon simple sous différentes épaisseurs.

A cet effet, le joint de culasse qu'elle concerne, du type comprenant une âme constituée par une tôle à laquelle sont associés des anneaux de feu entourant les ouvertures des chambres de combustion, l'âme comprenant en outre des ouvertures pour le passage d'huile, de liquide de refroidissement, et pour le passage de goujons de serrage de la culasse sur le bloc moteur, les deux faces de l'âme étant équipées de cordons souples pour réaliser l'étanchéité aux liquides, est caractérisé en ce que l'âme comporte, sur l'une de ses faces un embouti servant au logement d'une plaque en acier, d'épaisseur supérieure à la profondeur de l'embouti, et constitutive des anneaux de feu disposés au passage des chambres de combustion.

L'âme du joint est réalisée à partir d'une tôle métallique, d'acier, d'acier inoxydable, ou d'acier ayant subi un revêtement de surface. La plaque constitutive des anneaux de feu est pour sa part réalisée en acier, acier inoxydable, ou en acier spécial. Les cordons d'étanchéité sont des cordons d'élastomère, par exemple silicone ou fluorocarbone.

L'âme du joint et la plaque constitutive des anneaux de feu sont réalisées indépendamment et assemblées l'une à l'autre avant montage sur un moteur.

Il est à noter que pour obtenir plusieurs joints de différentes épaisseurs, il est possible de ne disposer que d'un seul type de plaques constitutives des anneaux de feu, qui sont montées dans des supports de différentes épaisseurs, ces dernières étant fonction de l'épaisseur souhaitée pour chaque joint à réaliser.

Avantageusement, les cordons d'étanchéité sont déposés par moulage à l'intérieur d'un moule dans lequel est logé l'âme du joint , et le même moule est utilisé pour des âmes métalliques d'épaisseurs différentes.

Il en résulte une grande simplicité de réalisation, puisqu'il suffit, pour obtenir trois types de joints d'épaisseurs différentes, de disposer d'un seul type de plaques constitutives des anneaux de feu, et de trois types de plaques d'épaisseurs différentes, formant l'âme du joint, ces plaques de différentes épaisseurs recevant toutes le dépôt des cordons d'étanchéité à l'intérieur d'un même moule. En effet, l'équilibrage du joint reste toujours le même, quelle que soit l'épaisseur de l'âme, puisque la différence entre l'épaisseur totale du cordon d'étanchéité et celle de la plaque formant les anneaux de feu reste la même.

De toute façon, l'invention sera bien comprise à l'aide de la description qui suit, en référence au dessin schématique annexé représentant, à titre d'exemple non limitatif, une forme d'exécution de ce joint de culasse :

Figure 1 est une vue à plat de ce joint de culasse du côté opposé aux anneaux de feu ;

Figure 2 est une vue à plat de la plaque constitutive des anneaux de feu ;

Figure 3 est une vue en coupe transversale et à échelle agrandie, d'une partie de ce joint de culasse, selon la ligne III-III de figure 1.

Le joint de culasse représenté au dessin comprend une partie principale ou âme, constituée par une plaque support 2 en tôle ou en acier comportant des ouvertures 3, au nombre de quatre, correspondant aux chambres de combustion, des ouvertures 4 servant au passage des goujons de serrage de la culasse sur le bloc moteur, et des ouvertures 5 pour le passage du liquide de refroidissement et du liquide de lubrification du moteur. De façon connue en soi, l'étanchéité au liquide est réalisée par l'intermédiaire de cordons 6 en élastomère déposés sur les deux faces de la plaque 2.

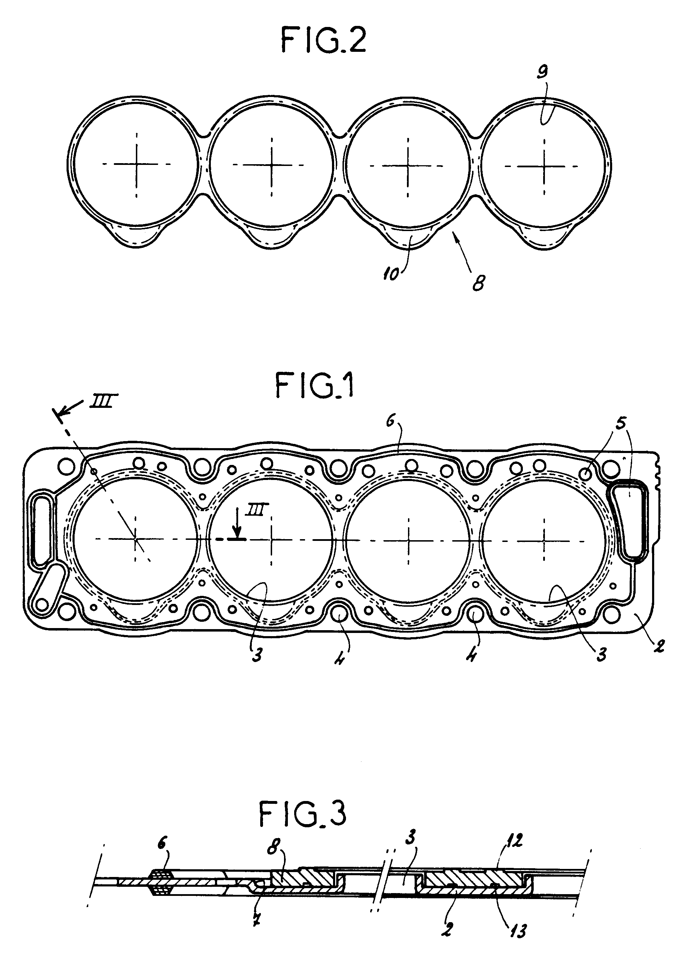

Comme cela est montré au dessin, notamment à la figure 3, la plaque 2 comporte un certain nombre de zones embouties 7, à la périphérie des ouvertures 3 des chambres de combustion, ainsi que dans les zones disposées entre lesdites ouvertures. Les anneaux de feu sont réalisés à partir d'une plaque 8 en acier, acier inoxydable ou acier spécial, comportant quatre ouvertures 9 correspondant aux chambres de combustion, les anneaux possédant, dans le cas présent, quatre languettes 10 latérales correspondant aux préchambres de combustion.

Comme cela ressort de la figure 3, l'épaisseur de la plaque 8 formant les anneaux de feu est supérieure à la profondeur de l'embouti 7 ménagé dans la plaque support, et la plaque 8 est rigidifiée par ménagement de nervures 12 et de rainures 13.

En pratique, quelle que soit l'épaisseur souhaitée pour le joint dans une plage d'épaisseur déterminée, un seul type de plaque 8 est utilisé, la variation d'épaisseur étant obtenue en jouant sur l'épaisseur de la plaque support 2. Il est à noter que, quelle que soit l'épaisseur de la plaque support 2 le dépôt des cordons d'étanchéité 6 est réalisé dans un même moule, de telle sorte que l'épaisseur totale des cordons, c'est-à-dire considérée de part et d'autre de la plaque, est toujours la même, l'équilibrage du joint demeurant le même quel que soit l'épaisseur de celui-ci.

Il est avantageux d'assurer, avant montage du joint de culasse sur un moteur, une solidarisation de la partie principale 2 du joint et de la plaque constitutive des anneaux de feu, afin d'éviter leur séparation accidentelle au cours des différentes manipulations auxquelles le joint est soumis entre sa fabrication et son montage sur le moteur. Cette solidarisation peut être réalisée soit par des points de soudure, soit par collage, soit encore par pincement de la plaque 8 dans les emboutis 7 de l'âme 2 qui présentent, à cet effet, des entrées rétrécies.

## Revendications

1. Joint de culasse pour moteur à combustion interne, du type comprenant une âme (2) constituée par une tôle à laquelle sont associés des anneaux de feu entourant les ouvertures des chambres de combustion, l'âme comprenant en outre des ouvertures pour le passage d'huile, de liquide de refroidissement, et pour le passage des goujons de serrage de la culasse sur le bloc moteur, les deux faces de l'âme étant équipées de cordons souples (6) pour réaliser l'étanchéité aux liquides, caractérisé en ce que l'âme (2) comporte, sur l'une de ses faces un embouti (7) servant au logement d'une plaque (8) en acier, d'épaisseur supérieure à la profondeur de l'embouti, et constitutive des anneaux de feu disposés au passage des chambres de combustion.

2. Joint de culasse selon la revendication 1, caractérisé en ce que les cordons d'étanchéité (6) sont déposés par moulage à l'intérieur d'un moule dans lequel est logé l'âme du joint, et le même moule est utilisé pour des âmes métalliques (2) d'épaisseurs différentes.

3. Joint de culasse selon l'une quelconque des revendications 1 et 2, caractérisé en ce que la partie principale ou âme (2) du joint et la plaque (8) constitutive des anneaux de feu sont solidarisées par des points de soudure.

4. Joint de culasse selon l'une quelconque des revendications 1 et 2, caractérisé en ce que la partie principale ou âme (2) du joint et la plaque (8) constitutive des anneaux de feu sont solidarisées par collage.

5. Joint de culasse selon l'une quelconque des revendications 1 et 2, caractérisé en ce que la partie principale ou âme (2) du joint et la plaque (8) constitutive des anneaux de feu sont solidarisées par pincement de la plaque (8) dans les emboutis (7) de l'âme (3) qui présentent, à cet effet, des entrées rétrécies.

## Patentansprüche

1. Zylinderkopfdichtung für eine Brennkraftmaschine, beinhaltend ein Kernstück (2) aus Blech, dem Flammringe zugeordnet sind, die die Öffnungen der Brennkammern umgeben, wobei das Kernstück ferner Öffnungen für den Durchtritt von Öl, Kühlflüssigkeit und für den Durchtritt von Bolzen zum Festspannen der Dichtung auf dem Motorblock aufweist und die beiden Flächen des Kernstückes mit weichelastischen Dichtschnüren versehen sind, um die Dichtigkeit gegenüber Flüssigkeit zu bewirken, **dadurch gekennzeichnet**, daß das Kernstück (2) auf einer seiner Flächen eine Vertiefung (7) aufweist, die der Aufnahme einer Stahlplatte (8) dient, deren Dicke größer ist als die Tiefe der Vertiefung und die die um die Durchlässe der Brennkammern angeordneten Flammringe bildet.

2. Zylinderkopfdichtung nach Anspruch 1, dadurch gekennzeichnet, daß die Dichtschnüre (6) durch Gießen im Inneren einer Gußform aufgebracht sind, in der das Kernstück der Dichtung eingesetzt ist, wobei die gleiche Form für metallische Kernstücke (2) unterschiedlicher Dicke benutzt wird.

3. Zylinderkopfdichtung nach einem der Ansprüche 1 und 2, dadurch gekennzeichnet, daß das Hauptteil oder Kernstück (2) der Dichtung und die die Flammringe bildende Platte (8) durch Schweißpunkt fest miteinander verbunden sind.

4. Zylinderkopfdichtung nach einem der Ansprüche 1 und 2, dadurch gekennzeichnet, daß das Hauptteil oder Kernstück (2) der Dichtung und die die Flammringe bildende Platte (8) durch Verkleben fest miteinander verbunden sind.

5. Zylinderkopfdichtung nach einem der Ansprüche 1 und 2, dadurch gekennzeichnet, daß das Hauptteil oder Kernstück (2) der Dichtung und die die Flammringe bildende Platte (8) durch Verklemmen der Platte (8) in den Vertiefungen (7) des Kernstückes (2) fest verbunden sind, die zu diesem Zweck eingezogene Einlaßöffnungen haben.

## Claims

1. A cylinder head gasket for an internal combustion engine, of the type comprising a core (2) constituted by a steel sheet with which are associated fire rings which surround the combustion chamber openings, the core additionally comprising openings for the passage of oil, cooling liquid, and for the passage of bolts for securing the cylinder head on the engine block, the two faces of the core being provided with flexible edgings (6) to effect a liquid-tight seal, characterised in that the core (2) includes, on one of its faces, a recess (7) serving to house a steel plate (8) having a thickness greater than the depth of the recess, and constituting fire rings disposed at the entrance to the combustion chambers.

2. A cylinder head gasket according to Claim 1, characterised in that the sealing edgings (6) are deposited by moulding within a mould in which the core of the gasket is housed, and the same mould is used for metal cores (2) of different thicknesses.

3. A cylinder head gasket according to either of Claims 1 and 2, characterised in that the main part or core (2) of the gasket and the plate (8) constituting the fire rings are secured together by spot welds.

4. A cylinder head gasket according to either of Claims 1 and 2, characterised in that the main part or core (2) of the gasket and the plate (8) constituting the fire rings are secured together by glueing.

5. A cylinder head gasket according to either of Claims 1 and 2, characterised in that the main part or core (2) of the gasket and the plate (8) constituting the fire rings are connected together by pinching of the plate (8) in the recesses (7) of the core (3) which have, for this purrpose, narrowed entrances.

EP 0 310 528 B1

# FIG.2

# FIG.1

# FIG.3

5